# EUROPEAN PATENT SPECIFICATION

(11) **EP 4 098 126 B1**
(45) Date of publication and mention of the grant of the patent: **11.03.2026**
(21) Application number: 21747194.5
(22) Date of filing: 18.01.2021
(51) Int. Cl.: A23J 3/00, A23J 3/04, A23J 3/16, A23L 5/00, A23L 7/109, A23L 17/00, A23J 3/26, A23L 13/60

(54) **NOODLE-FORM BODY AGGREGATE AND METHOD FOR PRODUCING SAME**
NUDELFÖRMIGES KÖRPERAGGREGAT UND VERFAHREN ZU SEINER HERSTELLUNG
AGRÉGAT DE CORPS EN FORME DE NOUILLES ET SON PROCÉDÉ DE PRODUCTION

(30) Priority: 27.01.2020 JP 2020011122; 23.04.2020 JP 2020076788
(43) Date of publication of application: 07.12.2022
(73) Proprietor: NIPPON SUISAN KAISHA, LTD., Minato-ku Tokyo 105-8676 (JP)
(72) Inventor: YOSHITOMI, Bunji, Hachioji-shi, Tokyo 192-0991 (JP)
(74) Representative: V.O.
(86) International application number: PCT/JP2021/001501
(87) International publication number: WO 2021/153316

(56) References cited:
- JP-A- 2010 524 487
- JP-A- 2013 039 121
- JP-A- 2019 154 271
- JP-A- H02 211 852
- JP-A- S 533 574
- JP-A- S 533 574
- JP-A- S4 819 782
- JP-A- S5 521 740
- JP-A- S5 521 740
- JP-A- S5 867 163
- JP-A- S5 867 163
- JP-A- S53 145 954
- JP-A- S57 122 768
- JP-A- S57 122 768
- JP-A- S6 387 962
- JP-A- S6 387 962
- JP-A- S61 260 839
- JP-A- S63 202 361
- US-A- 4 559 236
- US-A- 4 559 236

## Description

### Technical Field

The technology of the present disclosure relates to a noodle-shaped body aggregate using a heat-coagulated protein processed food product and the present invention is a a method of producing the same.

### Background Art

A heat-coagulated protein processed food product can be produced by coagulating the protein of a raw material using heat.

For example, WO 2012/060348 describes a method of producing a heat-coagulated protein processed food product using minced fish. Japanese Patent Application Laid-Open (JP-A) No. 2004-129514 describes a method of producing a heat-coagulated protein processed food product processed into noodle-shaped bodies using minced fish. US 4,559,236 describes fabricated meat products from mechanically deboned meat. In an embodiment a paste made from the deboned meat is extruded into fibers. JP 2019 154271 is directed to an extrusion molding machine for extruding food ingredients to form them into a certain shape.

However, with a conventional heat-coagulated protein processed food product processed into noodle-shaped bodies, it is difficult to arrange the noodle-shaped bodies after forming them. In a case in which an aggregate of the noodle-shaped bodies is produced, the aggregate becomes uneven and bulky, which has caused problems in terms of storability, freeze tolerance, or transportation compatibility.

### SUMMARY OF INVENTION

### Technical Problem

As described above, in a noodle-shaped body aggregate of a heat-coagulated protein processed food product, in a case in which noodle-shaped bodies do not cohere compactly with each other, the aggregate becomes non-uniform and bulky, and unevenness occurs between a part where the noodle-shaped bodies are in contact with each other and a part where noodle-shaped bodies are not in contact, whereby variations occur in terms of dried state, oxidized state, water retainability, contact with microorganisms, diffusion of volatile components in the noodle-shaped bodies, and growth of ice crystals during freezing. As a result, taste, texture, storage tolerance, and freeze tolerance may become non-uniform. In a case in which the aggregate is bulky, the product becomes large, and further packaging costs, storage costs, and transportation costs for the product are incurred. An object of the technique of the present disclosure is to provide a method of producing a noodle-shaped body aggregate of a heat-coagulated protein processed food product having uniformity and compactness.

### Solution to Problem

The technology of the disclosure is as follows. The present invention relates to a method according to claim 1, namely to a method of producing a noodle-shaped body aggregate, the method comprising:
continuously heat-coagulating and molding a mixture that includes a protein, a lipid, and moisture and has fluidity, by an internal heating method while the mixture is moved within a cylinder having a heating part, and a non-heating part following on from the heating part, to form a heat-coagulated protein processed food product; and
dynamically cutting the heat-coagulated protein processed food product with a cutting blade to form a plurality of noodle-shaped bodies and then cohering the noodle-shaped bodies with each other as they are.
Further embodiments of the method of the invention include:
[1] In a method according to the present invention, a noodle-shaped body aggregate is provided , comprising a plurality of noodle-shaped bodies, the noodle-shaped bodies being formed into a noodle-shape from a heat-coagulated protein processed food product, and surfaces of the noodle-shaped bodies cohering with each other along a longitudinal direction.
[2] In an embodiment, the noodle-shaped body aggregate according to [1], can be separated into noodle-shaped bodies at positions at which the noodle-shaped bodies cohere with each other.
[3] In an embodiment, a shape of a cross section perpendicular to the longitudinal direction of each of the noodle-shaped bodies is a substantially quadrangular shape.
[4] In an embodiment, the noodle-shaped bodies according to any one of embodiment [1] to [3] cohere with each other along 50% or more of a length of each of the noodle-shaped bodies in the longitudinal direction.
[5] In an embodiment, a length of each of the noodle-shaped bodies according to any one of embodiment [1] to [4], is at least 5 cm or more.
[6] In an embodiment, a maximum diameter of the cross section perpendicular to the longitudinal direction of the noodle-shaped body according to any one of embodiment [1] to [5], wherein is from 1 mm to 30 mm.
[7] In an embodiment, a minimum diameter of the cross section perpendicular to the longitudinal direction of the noodle-shaped body of any one of embodiment [1] to [6], wherein is from 0.1 mm to 20 mm.
[8] In an embodiment, an average area of the cross section perpendicular to the longitudinal direction of the noodle-shaped body of any one of embodiment [1] to [7] is from 1 mm² to 300 mm².
[9] In an embodiment, the heat-coagulated protein processed food product of any one of embodiment [1] to [8] is obtained by continuously heat-coagulating and molding a mixture that includes a protein, a lipid, and moisture and has fluidity, by an internal heating method while the mixture is moved within a cylinder having a heating part, and a non-heating part following on from the heating part, and the heat-coagulated protein processed food product formed by the heat-coagulating is cut into noodle shapes so as to cohere with each other.
[10] In accordance with embodiment 9, a pressure may be applied to a cutting blade before the cutting is 0.1 MPa or more.
[11] In accordance with embodiment 9 or 10 a cutting blade may be used during the cutting that performs dynamic cutting.
[12] In an embodiment, In an embodiment, the plurality of noodle-shaped bodies after the cutting coheres with each other at surfaces along a longitudinal direction of the noodle-shaped bodies.
[13] In accordance with embodiment [12], a pressure applied to the cutting blade before the cutting may be 0.1 MPa or more.

### Advantageous Effects of Invention

According to the technology of the disclosure, it is possible to provide a noodle-shaped body aggregate of a heat-coagulated protein processed food product having uniformity and compactness.

### BRIEF DESCRIPTION OF DRAWINGS

Fig. 1 is a schematic view of a noodle making machine for a noodle-shaped body aggregate of the present embodiment.
Fig. 2A is an assembly drawing schematically illustrating an outline of a cutting device of Fig. 1.
Fig. 2B is an assembly drawing schematically illustrating an outline of the cutting device of Fig. 1.
Fig. 3A is a schematic view of a first cutting blade in Fig. 2 as viewed from a discharge direction.
Fig. 3B is a schematic view of a second cutting blade in Fig. 2 as viewed from a discharge direction.
Fig. 4A is a schematic view of a modification of the cutting device, and is an assembly drawing in perspective view.
Fig. 4B is a schematic view of a modification of the cutting device, and is an assembly drawing in a perspective view.
Fig. 4C is a schematic view of a modification of the cutting device, and is shown in a side cross section.
Fig. 5A is a schematic view of a modification of a cylinder.
Fig. 5B is a schematic view of a modification of a cylinder.
Fig. 6 is a schematic perspective view illustrating a noodle-shaped body aggregate of a heat-coagulated protein processed food product.
Fig. 7 is a schematic view illustrating a cross section perpendicular to a longitudinal direction of a noodle-shaped body aggregate of a heat-coagulated protein processed food product.
Fig. 8 is a schematic view illustrating a side surface along the longitudinal direction of a noodle-shaped body aggregate of a heat-coagulated protein processed food product.

### DESCRIPTION OF EMBODIMENTS

In the following description, in a case in which numerical values are listed for certain specifications, it means that numerical values described later are more desirable than the numerical values described earlier. In the plurality of drawings, components denoted by the same reference numerals refer to the same components even in a case in which the description thereof is omitted.

A heat-coagulated protein processed food product can be produced by heating a protein usable as a food product to form an irreversible gel. The heat-coagulated protein processed food product may include components other than proteins forming a gel as long as an irreversible gel is formed by heating and the components are retained in the formed gel. Examples of the protein usable as a food product include animal proteins, plant proteins, and microbial proteins.

As raw materials of the animal protein, vertebrates, arthropods, and mollusks may be used. As the vertebrates, fish, birds, amphibians, reptiles, and mammals may be used. As the arthropods, insects and crustaceans may be used. As the mollusks, shellfish and Cephalopoda may be used. As the fish, cod, sharks, wrasses, Nemipteridae, catfish, flying fish, Atka mackerel, largehead hairtails, lizardfish, and Nibea mitsukurii may be used. As the fish, white fish may be used. As the crustaceans, crabs and shrimp may be used. As tissue to be raw materials of the animal protein, muscle, egg, and milk may be used.

As raw materials of the plant protein, grains and beans may be used. As the grains, wheat and corns may be used. As the beans, soybeans, peas, and fava beans may be used. As tissue to be raw materials of the plant protein, fruits and seeds may be used. As a part of the seed, a germ, endosperm, or a cotyledon may be used.

As raw materials of the microbial protein, filamentous fungi, yeasts, and bacteria may be used. As raw materials of the microbial protein, a protein extracted from microorganisms and a protein obtained from a culture medium in which microorganisms are cultured may be used.

The protein may be used singly, or in mixture of two or more kinds thereof as long as the protein forms an irreversible gel by heating.

The heating method uses internal heating as long as the whole body to be heated is heated. As the internal heating, Joule heating, microwave heating, or high-frequency heating may be used.

As the strength of the gel irreversibly formed by the heating, in a case in which the gel is formed into a noodle-shaped body, the noodle-shaped body is necessary to have such a shape retaining property as to be solid at least under normal temperature and normal pressure. In a case in which the gel is formed into a noodle-shaped body and the noodle-shaped body has such a shape retaining property as to be solid at a temperature equal to or higher than body temperature, 40°C or higher, 50°C or higher, 60°C or higher, or 70°C or higher, it is advantageous because the noodle-shaped body can be cooked in a warm state and eaten. In the case of cooking the noodle-shaped body in a warm state, the temperature may be set to at least 100°C or lower at the time of eating. In a case in which the gel is formed into a noodle-shaped body and the noodle-shaped body has such a shape retaining property as to be solid at a temperature equal to or lower than body temperature, 30°C or lower, 20°C or lower, 10°C or lower, 5°C or lower, or 0°C or lower, it is advantageous because the noodle-shaped body can be cooked in a cold state and eaten. In the case of cooking the noodle-shaped body in a cold state, the temperature may be set to -20°C or higher at least at the time of eating. In a case in which the gel is formed into a noodle-shaped body and the noodle-shaped body has such a shape retaining property as to be solid under normal temperature and normal pressure after storing at 0°C or lower for 3 days or more, 10 days or more, 30 days or more, 60 days or more, or 90 days or more and then thawing, it is advantageous because frozen storage of the noodle-shaped body becomes possible. The property of being able to be cooked in a warm state and eaten, the property of being able to be cooked in a cold state and eaten, and the property allowing frozen storage may be arbitrarily combined in order that the noodle-shaped body has more advantageous properties.

As the strength of the gel irreversibly formed by the heating, in a case in which the gel is eaten as a noodle-shaped body and the noodle-shaped body has such a hardness as to be felt as a noodle, it is advantageous because the noodle-shaped body can be cooked and eaten as a noodle. A mode in which the noodle-shaped bodies can be cooked and eaten as noodles may be Udon, Soba, Ramen, fried noodles, or pasta. The hardness as to be felt as a noodle can be, for example, 100 g/mm or more, 150 g/mm or more, or 200 g/mm or more as the breaking strength of the gel. The hardness suitable for eating as a noodle can be, for example, 500 g/mm or less, 400 g/mm or less, or 300 g/mm or less as the breaking strength of the gel. The breaking strength of the gel can be measured using a rheometer. As the rheometer for measuring the breaking strength of the gel, for example, Rheo TEX manufactured by Sun Scientific Co., Ltd. or the like can be used. As the plunger used for measuring the breaking strength of the gel, a linear plunger such as one using a piano wire may be used. The thickness of the piano wire used for the measurement may be, for example, 0.1 mm, 0.2 mm, or 0.3 mm in diameter. As the plunger used for measuring the breaking strength of the gel, a plunger having a substantially spherical part used for measurement may be used. The radius of the substantially spherical sphere used for the measurement may be, for example, 2.5 mm, 3 mm, 5 mm, or 10 mm.

For example, Patent Document 1 discloses a method of producing a gel having such a hardness as to be felt as a noodle. A noodle-shaped body having such a hardness as to be felt as a noodle in the case of being eaten as a noodle-shaped body can be produced by cutting a heat-coagulated protein processed food product having a gel strength which exhibits a higher hardness as a whole than the hardness of the noodle-shaped body. The gel strength of the heat-coagulated protein processed food product before being cut into a noodle-shaped body can be set to 100 g weight/cm (0.98 N/cm) or more, 150 g weight/cm (1.5 N/cm) or more, 200 g weight/cm (2.0 N/cm) or more, 250 g weight/cm (2.5 N/cm) or more, or 300 g weight/cm (2.9 N/cm) or more by using, as an index, a gel strength (unit: g weight/cm) defined as a force (g weight) necessary for forming a dent of 1cm in the heat-coagulated protein processed food product. The gel strength of the heat-coagulated protein processed food product before being cut into a noodle-shaped body can be set to 1,000 g weight/cm (9.8 N/cm) or less, 500 g weight/cm (4.9 N/cm) or less, or 300 g weight/cm (2.9 N/cm) or less. The gel strength can be measured using a rheometer. As the rheometer for measuring the gel strength, for example, Rheo TEX (Sun Scientific Co., Ltd.) or the like can be used. As the plunger used for measuring the gel strength, a linear plunger such as one using a piano wire may be used. The thickness of the piano wire used for the measurement may be, for example, 0.1 mm, 0.2 mm, or 0.3 mm in diameter. As the plunger used for measuring the gel strength, a plunger having a substantially spherical part used for measurement may be used. The radius of the substantially spherical sphere used for the measurement may be, for example, 2.5 mm, 3 mm, 5 mm, or 10 mm.

By cutting a heat-coagulated protein processed food product to prepare the noodle-shaped body of the heat-coagulated protein processed food product, it is possible to suppress fuzzing that occurs when the surface of the noodle-shaped body is dragged by pressure projection, whereby the surface of the noodle-shaped body becomes smooth. As a result of which a smooth texture can be obtained when the noodle-shaped body is eaten as a noodle. For example, the degree of fuzzing can be observed by observing the surface of the noodle-shaped body with an electron microscope.

In a case in which the pressure applied to the cutting blade before cutting exceeds the pressure that the pipe can withstand in cutting the heat-coagulated protein processed food product, the pipe is deformed or ruptured before the heat-coagulated protein processed food product is cut into the noodle-shaped bodies, whereby the heat-coagulated protein processed food product cannot be cut into the noodle-shaped bodies. The pressure that the pipe used for the production of the heat-coagulated protein processed food product can withstand is less than 1 MPa, less than 1.5 MPa, less than 2 MPa, or less than 3 MPa from the viewpoints of convenience, strength resulting from the necessity of a heating method, and the like. For this reason, the noodle-shaped body having such a hardness as to be felt as a noodle can be produced by performing dynamic cutting to cut a heat-coagulated protein processed food product having a gel strength which exhibits a higher hardness as a whole than the hardness of the noodle-shaped body.

Even in a case in which the pressures applied to the pipe and the cutting blade are less than 1 MPa, less than 0.5 MPa, or less than 0.1 MPa, when continuous operation is performed for a long time, for example, 10 minutes or more, 30 minutes or more, 1 hour or more, or 3 hours or more, problems such as adhesion of the heat-coagulated protein processed food product to the cutting blade little by little, deterioration of the cutting blade sharpness, and clogging of the heat-coagulated protein processed food product in the pipe or the cutting blade may occur. By dynamic cutting, it is possible to suppress clogging and to stably produce the noodle-shaped bodies.

Dynamic cutting is cutting by causing a cutting blade to dynamically act on a heat-coagulated protein processed food product at the time of cutting the heat-coagulated protein processed food product. The dynamic cutting involves acting dynamically without intermission or acting dynamically with intermission while the heat-coagulated protein processed food product is in contact with the cutting blade. The dynamic cutting involves rotating, vibrating, or reciprocating the cutting blade. By performing the dynamic cutting, the pressure applied to the cutting blade can be reduced. By performing the dynamic cutting, it is possible to prevent the pipe for feeding the heat-coagulated protein processed food product to the cutting blade from being deformed or ruptured by pressure at the time of cutting the heat-coagulated protein processed food product. By performing the dynamic cutting, it is possible to suppress adhesion of the heat-coagulated protein processed food product to the cutting blade and to prevent the heat-coagulated protein processed food product from being clogged in the pipe or the cutting blade at the time of cutting the heat-coagulated protein processed food product into the noodle-shaped body. By performing the dynamic cutting, it is possible to cut even a heat-coagulated protein processed food product in which at the time of cutting the heat-coagulated protein processed food product, the pressure applied to the cutting blade before cutting is 0.1 MPa or more, 0.5 MPa or more, 1 MPa or more, 1.5 MPa or more, 2 MPa or more, or 3 MPa or more.

The dynamic cutting can also be performed by causing a plurality of cutting blades to act simultaneously and all dynamically on a heat-coagulated protein processed food product at the time of cutting the heat-coagulated protein processed food product. In a case in which a plurality of cutting blades is caused to act simultaneously and all dynamically on the heat-coagulated protein processed food product at the time of cutting the heat-coagulated protein processed food product, the thickness of each cutting blade is set to 2 mm or less, 1 mm or less, 0.5 mm or less, 0.3 mm or less, or 0.1 mm or less, whereby the cut heat-coagulated protein processed food product is easily fed out from between the cutting blades. The cutting blade can be 0.01 mm or more, 0.05 mm or more, or 0.1 mm or more from the viewpoint of strength.

A plurality of cutting blades is caused to act simultaneously and all dynamically on the heat-coagulated protein processed food product at the time of cutting the heat-coagulated protein processed food product, whereby it is possible to simultaneously make a plurality of noodle-shaped bodies of the heat-coagulated protein processed food product depending on the number of cutting blades used.

The dynamic cutting can be performed a plurality of times on a heat-coagulated protein processed food product at the time of cutting the heat-coagulated protein processed food product. In the case of cutting the heat-coagulated protein processed food product a plurality of times, by setting the interval between the plurality of cuts to 10 cm or less, 5 cm or less, 3 cm or less, or 1 cm or less, deformation of the heat-coagulated protein processed food product is suppressed, and the food is easily processed into noodle-shaped bodies. For example, in a case in which cutting is performed twice, the distance between the cutting blade for performing the first cutting and the cutting blade for performing the second cutting is set to 10 cm or less, 5 cm or less, 3 cm or less, or 1 cm or less, whereby more homogeneous noodle-shaped bodies can be produced.

In a case in which a plurality of cutting blades is caused to act simultaneously and all dynamically on a heat-coagulated protein processed food product at the time of cutting the heat-coagulated protein processed food product and dynamic cutting is performed a plurality of times, it is easy to adjust the thickness of the cutting blade to be equal to or less than a predetermined value and the cutting interval to be equal to or less than a predetermined value by performing dynamic cutting in which the cutting blades are being vibrated or reciprocated. For example, a heat-coagulated protein processed food product is fed using a substantially quadrangular pipe, cutting blades are arranged in parallel at a predetermined interval as first cutting blades, and second cutting blades are arranged in parallel at a predetermined interval so as to be orthogonal to the first cutting blades, and dynamic cutting is performed twice, whereby noodle-shaped bodies which have a uniform thickness and in which the shape of the vertical cross section in the longitudinal direction is substantially quadrangular can be simultaneously produced. Similarly, for example, a heat-coagulated protein processed food product is fed using a substantially triangular or substantially hexagonal pipe, cutting blades are arranged in parallel at a predetermined interval as first cutting blades, second cutting blades are arranged in parallel at a predetermined interval so as to intersect the first cutting blades at an angle of 60°, and third cutting blades are arranged in parallel at a predetermined interval so as to intersect the first cutting blades at an angle of 120°, and three times of dynamic cutting are performed. This makes it possible to simultaneously produce noodle-shaped bodies which have a uniform thickness and in which the shape of the vertical cross section in the longitudinal direction is a substantially triangular shape or a substantially hexagonal shape depending on the interval of each cutting blade.

By cutting the heat-coagulated protein processed food product at a predetermined length in the longitudinal direction, the noodle-shaped body of the heat-coagulated protein processed food product can be a noodle-shaped body having the predetermined length. The length of the noodle-shaped body can be set to at least 5 cm or more, 10 cm or more, 15 cm or more, 20 cm or more, 25 cm or more, 30 cm or more, 40 cm or more, or 50 cm or more in order to be readily felt as a noodle when eaten. The length of the noodle-shaped body can be at least 2 m or less, 1.5 m or less, 1 m or less, 80 cm or less, 70 cm or less, 60 cm or less, 50 cm or less, 40 cm or less, or 30 cm or less in order to be easily eaten as a noodle when eaten.

The thickness of the noodle-shaped body can be expressed as the maximum diameter of the cross section perpendicular to the longitudinal direction of the noodle-shaped body, that is, the length of the longest straight line passing through the center of gravity of the cross section. The maximum diameter of the cross section perpendicular to the longitudinal direction of the noodle-shaped body can be at least 1 mm or more, 2 mm or more, 3 mm or more, 5 mm or more, or 7 mm or more in order that the noodle-shaped body has such a thickness as to be felt as a noodle in the case of being eaten as a noodle-shaped body. The maximum diameter of the cross section perpendicular to the longitudinal direction of the noodle-shaped body can be at most 30 mm or less, 20 mm or less, 15 mm or less, 10 mm or less, or 8 mm or less in order to be easily eaten as a noodle when eaten.

The thickness of the noodle-shaped body can be expressed as the minimum diameter of the cross section perpendicular to the longitudinal direction of the noodle-shaped body, that is, the length of the shortest straight line passing through the center of gravity of the cross section. The minimum diameter of the cross section perpendicular to the longitudinal direction of the noodle-shaped body can be at least 0.5 mm or more, 0.7 mm or more, 1 mm or more, 1.5 mm or more, 2 mm or more, or 3 mm or more in order that the noodle-shaped body has such a thickness as to be felt as a noodle in the case of being eaten as a noodle-shaped body. The minimum diameter of the cross section perpendicular to the longitudinal direction of the noodle-shaped body can be at most 20 mm or less, 10 mm or less, 7 mm or less, or 5 mm or less in order to be easily eaten as a noodle when eaten.

The thickness of the noodle-shaped body can be expressed as the average area of the cross section perpendicular to the longitudinal direction of the noodle-shaped body. The average area of the cross section perpendicular to the longitudinal direction of the noodle-shaped body can be at least 1 mm² or more, 5 mm² or more, 10 mm² or more, 15 mm² or more, 20 mm² or more, 30 mm² or more, or 50 mm² or more in order that the noodle-shaped body has such a thickness as to be felt as a noodle in the case of being eaten as a noodle-shaped body. The average area of the cross section perpendicular to the longitudinal direction of the noodle-shaped body can be at most 300 mm² or less, 200 mm² or less, 100 mm² or less, 75 mm² or less, or 50 mm² or less in order to be easily eaten as a noodle when eaten. In the noodle-shaped body of the heat-coagulated protein processed food product, the properties of the noodle-shaped body can be arbitrarily combined depending on the desired use.

The noodle-shaped body aggregate of the heat-coagulated protein processed food product is produced by dynamically cutting the heat-coagulated protein processed food product into noodle-shaped bodies and then cohering with each other as they are. Coherence between the noodle-shaped bodies of the heat-coagulated protein processed food product occurs due to the viscosity of the heat-coagulated protein processed food product. The noodle-shaped bodies of the heat-coagulated protein processed food product have properties of being soft and difficult to gather after being processed into the noodle-shaped bodies. In the noodle-shaped bodies of the heat-coagulated protein processed food product, coherence occurs only partially even in a case in which the noodle-shaped bodies are individually produced and then arranged side by side. In regard to the noodle-shaped body aggregate of the heat-coagulated protein processed food product, by cutting the heat-coagulated protein processed food product into noodle-shaped bodies and then cohering with each other as they are, the noodle-shaped bodies can cohere with each other 50% or more, 60% or more, 70% or more, 80% or more, 90% or more, or 95% or more in the longitudinal direction of each noodle-shaped body. In regard to the noodle-shaped body aggregate of the heat-coagulated protein processed food product, by cutting the heat-coagulated protein processed food product into noodle-shaped bodies and then cohering with each other as they are, it is possible to make a noodle-shaped body aggregate of the heat-coagulated protein processed food product in which the noodle-shaped bodies can cohere with each other 50% or more, 60% or more, 70% or more, 80% or more, 90% or more, or 95% or more in the longitudinal direction of each noodle-shaped body.

The noodle-shaped body aggregate of the heat-coagulated protein processed food product can be made into a uniform and compact aggregate as a whole by cutting the heat-coagulated protein processed food product into noodle-shaped bodies and then cohering with each other as they are. The noodle-shaped body aggregate of the heat-coagulated protein processed food product is a uniform and compact aggregate as a whole, and thus can be an aggregate having storability, freeze tolerance, or transportation compatibility.

The noodle-shaped body aggregate of the heat-coagulated protein processed food product needs to have such a shape retaining property as to be solid at least under normal temperature and normal pressure in a case in which noodle-shaped bodies are formed into a noodle-shaped body aggregate. In a case in which noodle-shaped bodies are formed into a noodle-shaped body aggregate and the noodle-shaped body aggregate is composed of noodle-shaped bodies having such a shape retaining property as to be solid at a temperature equal to or higher than body temperature, 40°C or higher, 50°C or higher, 60°C or higher, or 70°C or higher, it is advantageous because the noodle-shaped body aggregate can be cooked in a warm state and eaten. In the case of cooking the noodle-shaped body aggregate in a warm state, the temperature may be set to at least 100°C or lower at the time of eating. In a case in which noodle-shaped bodies are formed into a noodle-shaped body aggregate and the noodle-shaped body aggregate is composed of noodle-shaped bodies having such a shape retaining property as to be solid at a temperature equal to or lower than body temperature, 30°C or lower, 20°C or lower, 10°C or lower, 5°C or lower, or 0°C or lower, it is advantageous because the noodle-shaped body aggregate can be cooked in a cold state and eaten. In the case of cooking the noodle-shaped body aggregate in a cold state, the temperature may be set to minus 20°C or higher at least at the time of eating. In a case in which noodle-shaped bodies are formed into a noodle-shaped body aggregate and the noodle-shaped body aggregate is composed of noodle-shaped bodies which have such a shape retaining property as to be solid under normal temperature and normal pressure after storing at 0°C or lower for 3 days or more, 10 days or more, 30 days or more, 60 days or more, or 90 days or more and then thawing, it is advantageous because frozen storage of the noodle-shaped body aggregate becomes possible. The property of being able to be cooked in a warm state and eaten, the property of being able to be cooked in a cold state and eaten, and the property allowing frozen storage may be arbitrarily combined in order that the noodle-shaped body aggregate has more advantageous properties.

The noodle-shaped body aggregate of the heat-coagulated protein processed food product can be configured to have a gel breaking strength of 100 g/mm or more, 150 g/mm or more, or 200 g/mm or more. In addition, the noodle-shaped body aggregate of the heat-coagulated protein processed food product can be configured to have a gel breaking strength of 500 g/mm or less, 400 g/mm or less, or 300 g/cm² or less.

The noodle-shaped body aggregate of the heat-coagulated protein processed food product can be composed of noodle-shaped bodies having a length of at least 5 cm or more, 10 cm or more, 15 cm or more, 20 cm or more, 25 cm or more, 30 cm or more, 40 cm or more, or 50 cm or more in order to be readily felt as noodles when eaten. The noodle-shaped body aggregate can be composed of noodle-shaped bodies having a length of at least 2 m or less, 1.5 m or less, 1 m or less, 80 cm or less, 70 cm or less, 60 cm or less, 50 cm or less, 40 cm or less, or 30 cm or less in order to be readily felt as noodles when eaten.

The noodle-shaped body aggregate of the heat-coagulated protein processed food product can be composed of noodle-shaped bodies having a maximum diameter of at least 1 mm or more, 2 mm or more, 3 mm or more, 5 mm or more, 7 mm or more, or 10 mm or more in the perpendicular to cross section perpendicular to the longitudinal direction of the noodle-shaped body in order to have such a thickness as to be felt as noodles in the case of being eaten. The noodle-shaped body aggregate of the heat-coagulated protein processed food product can be composed of noodle-shaped bodies having a maximum diameter of at most 30 mm or less, 20 mm or less, 15 mm or less, or 11 mm or less in the cross section perpendicular to the longitudinal direction of the noodle-shaped body in order to be easily eaten as noodles when eaten.

The noodle-shaped body aggregate of the heat-coagulated protein processed food product can be composed of noodle-shaped bodies having an average area of at least 1 mm² or more, 5 mm² or more, 10 mm² or more, 15 mm² or more, 20 mm² or more, 30 mm² or more, or 50 mm² or more in the cross section perpendicular to the longitudinal direction of the noodle-shaped body in order to have such a thickness as to be felt as noodles in the case of being eaten as noodle-shaped bodies. The noodle-shaped body aggregate of the heat-coagulated protein processed food product can be composed of noodle-shaped bodies having an average area of at most 300 mm² or less, 200 mm² or less, 100 mm² or less, 75 mm² or less, or 50 mm² or less in the cross section perpendicular to the longitudinal direction of the noodle-shaped body in order to be easily eaten as noodles when eaten.

The noodle-shaped body aggregate of the heat-coagulated protein processed food product can be composed of noodle-shaped bodies in which the above-described properties of the noodle-shaped body are arbitrarily combined depending on the desired use. By cutting the heat-coagulated protein processed food product into noodle-shaped bodies and then cohering with each other as they are, the noodle-shaped body aggregate of the heat-coagulated protein processed food product can be made such that variations in the above-described properties of each noodle-shaped body which constitute the aggregate can be suppressed to within ± 20%, within ± 10%, within ± 5%, within ± 3%, or within ± 1% of the average value of these of the noodle-shaped bodies.

In regard to the noodle-shaped body aggregate of the heat-coagulated protein processed food product, it is possible to make a frozen body of the noodle-shaped body aggregate of the heat-coagulated protein processed food product by cutting the heat-coagulated protein processed food product into noodle-shaped bodies, cohering with each other as they are, and then freezing the noodle-shaped bodies. In regard to the noodle-shaped body aggregate of the heat-coagulated protein processed food product, the frozen body of the noodle-shaped body aggregate of the heat-coagulated protein processed food product that is obtained by cutting the heat-coagulated protein processed food product into noodle-shaped bodies, cohering with each other as they are, and then freezing the noodle-shaped bodies, can be a frozen body in which separation at the time of freezing and after freeze-thawing is suppressed and which has storability, freeze tolerance, or transportation compatibility. In regard to the noodle-shaped body aggregate of the heat-coagulated protein processed food product, the frozen body of the noodle-shaped body aggregate of the heat-coagulated protein processed food product that is obtained by cutting the heat-coagulated protein processed food product into noodle-shaped bodies, cohering with each other as they are, and then freezing the noodle-shaped bodies, can be immediately separated at positions of the coherence at the time of being reconstituted in hot water and ready to eat, and thus the cooking time can be shortened.

In regard to the noodle-shaped body aggregate of the heat-coagulated protein processed food product, it is possible to make a noodle-shaped body aggregate of a heat-coagulated protein processed food product packed in a container or a frozen body of a noodle-shaped body aggregate of a heat-coagulated protein processed food product packed in a container by cutting the heat-coagulated protein processed food product into noodle-shaped bodies, cohering with each other as they are, and then packing the noodle-shaped bodies in a container as they are or after freezing. It is possible to prolong the storage period by using a packaging material capable of degassing or gas replacement as a container for the noodle-shaped body aggregate of the heat-coagulated protein processed food product packed in a container. It is possible to prolong the storage period and improve the resistance to freeze storage by using a packaging material having freeze tolerance in addition to the property capable of degassing or gas replacement as a container for the frozen body of the noodle-shaped body aggregate of the heat-coagulated protein processed food product packed in a container.

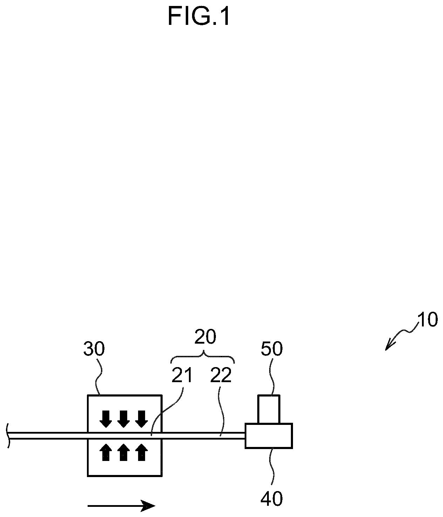

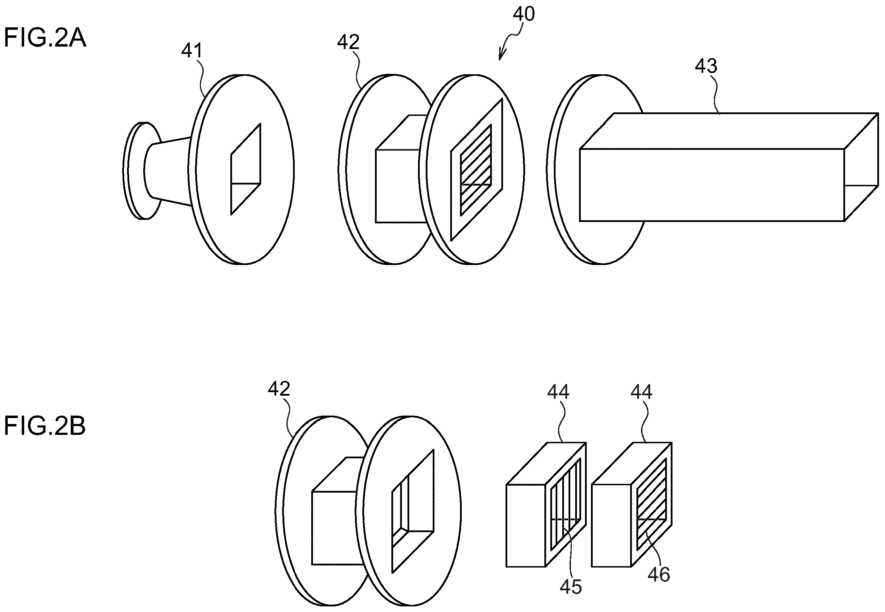

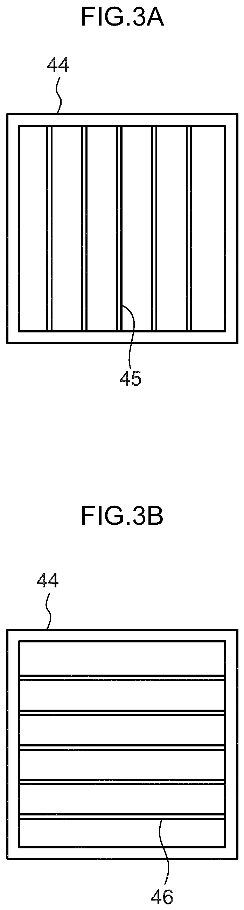

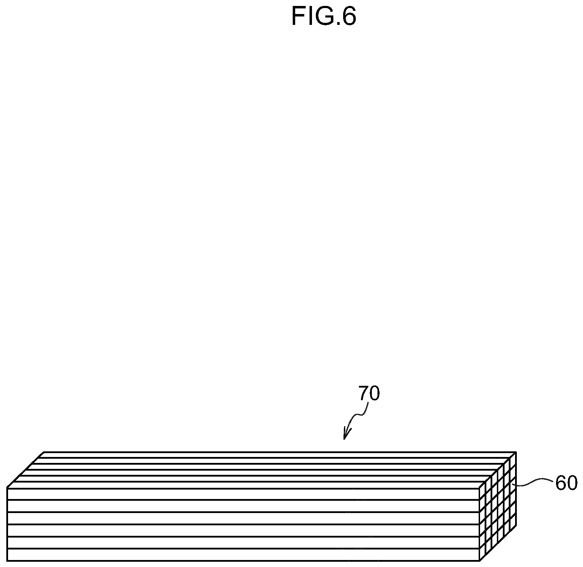

Fig. 1 is a schematic view of a noodle making machine 10 of a noodle-shaped body aggregate 70 (see Fig. 6 to Fig. 8) of the present embodiment. A mixture including protein, lipid, and moisture and having fluidity moves within a cylinder 20 and is sent to a heating part 21 having an internal heater 30. The mixture is formed into a heat-coagulated protein processed food product which is a processed food product continuously heat-coagulated by an internal heating method in the heating part 21. The formed heat-coagulated protein processed food product is cut by cutting blades 45 and 46 (see Fig. 2A, Fig. 2B, Fig. 3A, and Fig. 3B) attached to a cutting device 40 provided in a non-heating part 22 following on from the heating part 21 within the cylinder 20 to obtain a plurality of noodle-shaped bodies 60 (see Fig. 6 to Fig. 8) formed into noodle-shape. During this cutting, vibration is applied to the cutting blades 45 and 46 by a vibrator 50 (for example, a plastic ball vibrator) attached to the cutting device 40, whereby the heat-coagulated protein processed food product undergoes dynamic cutting. Thus, a noodle-shaped body aggregate 70 in which the plurality of noodle-shaped bodies 60 coheres with each other on the surface along the longitudinal direction is formed.

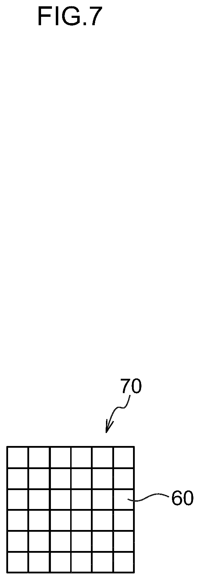

Fig. 2A and Fig. 2B are assembly drawings schematically illustrating an outline of the cutting device 40. The cutting device 40 has a structure including a cross-sectional shape changing nozzle 41 that changes the cross-sectional shape of the cylinder 20 from a circular shape to a quadrangular shape on the upstream side, a blade holder 42 that is mounted on the downstream side of the cross-sectional shape changing nozzle 41 and houses the cutting blades 45, 46, and a discharge nozzle 43 that is mounted on the downstream side of the blade holder 42 and discharges the noodle-shaped body aggregate 70. Two blade frames 44 in series are housed in the blade holder 42. A first cutting blade 45 is attached to the blade frame 44 on the upstream side, and a second cutting blade 46 is attached to the blade frame 44 on the downstream side. As illustrated in Fig. 3A and Fig. 3B, a plurality of cutting blades 45, 46 is attached to each blade frame 44 at equal intervals in parallel. The first cutting blades 45 and the second cutting blades 46 are attached in directions orthogonal to each other. Vibration is applied to the first cutting blades 45 and the second cutting blades 46 by the vibrator 50 as described above, whereby each cutting blade performs dynamic cutting. Here, the significance of performing dynamic cutting twice by the first cutting blades 45 and the second cutting blades 46 is as described above. The noodle-shaped bodies 60 (see Fig. 7) having a substantially uniform lattice cross-sectional shape can be obtained by performing dynamic cutting with the first cutting blades 45 and the second cutting blades 46 orthogonal to each other. The reason why the cross-sectional shape of the cylinder 20 is changed from a circular shape to a quadrangular shape by the cross-sectional shape changing nozzle 41 is that in a case in which the cross-sectional shape remains circular, the cross-sectional shape does not become a uniform lattice cross-sectional shape, and the pressure is not evenly applied, whereby clogging occurs.

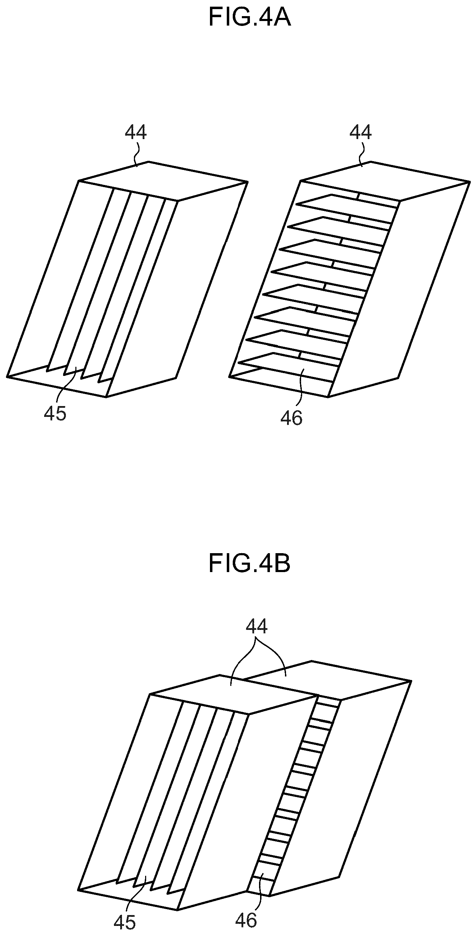

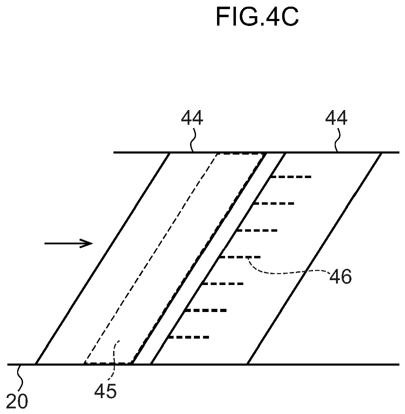

As illustrated in assembly drawings in side views of Fig. 4A and Fig. 4B as a modification of the cutting device 40, the blade frame 44 may be formed into a shape inclined along the discharge direction, the first cutting blades 45 may be attached in a state of being inclined along the discharge direction, and the second cutting blades 46 may be attached so as to be positioned closer to the discharge direction toward the upper side. As illustrated in the side cross section of Fig. 4C, the position of the heat-coagulated protein processed food product which is moving in the cylinder 20 and hits the cutting blades 45, 46 can be made different in the vertical direction by attaching the cutting blades 45, 46 in this manner. As a result of which the pressure applied to the cutting blades 45, 46 can be distributed, and smoother cutting can be performed.

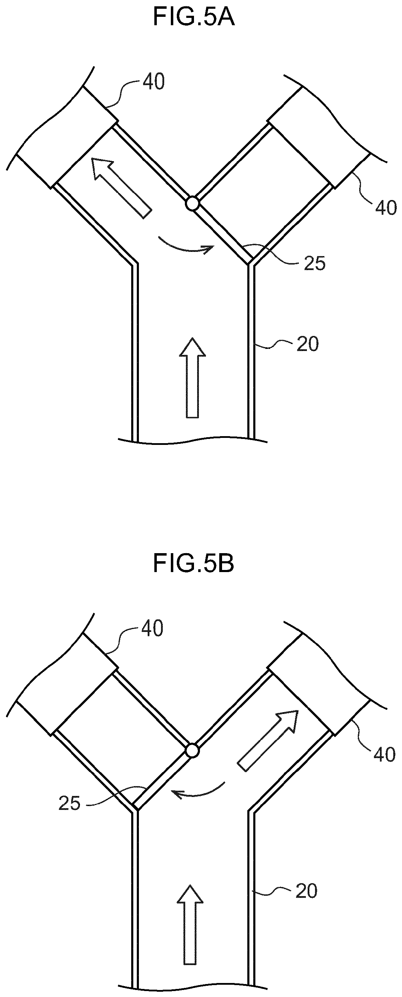

As shown in the schematic views of Fig. 5A and Fig. 5B as a modification of the cylinder 20, the cylinder 20 is branched into a Y shape, the cutting device 40 is provided on the downstream side of each of the branched parts. By switching the flap 25, the flow path of the heat-coagulated protein processed food product can be switched. With this configuration, while the cutting device 40 in one branch is operated, maintenance such as replacement of the cutting blades 45 and 46 of the cutting device 40 in the other branch can be performed, whereby the operation rate of the noodle making machine 10 can be improved.

### Examples

Hereinafter, one aspect of the technology of the disclosure will be described with reference to examples. However, the technology of the disclosure is not limited thereto by any means. Note that "%" is on a mass basis unless otherwise specified.

### [Example]

### (1) Preparation of Fish Sausage-Like Noodle-Shaped Body Raw Material and Fish Noodle-Like Noodle-Shaped Body Raw Material

The formulations of a fish sausage-like noodle-shaped body raw material and a fish noodle-like noodle-shaped body raw material were as shown in Table 1. For the minced fish, a mixture of Pacific cod and walleye pollack was used. As the plant protein, soybean protein was used. The above two types of raw materials, that is, two types of kneaded meats of Formulation 1 (fish sausage-like) and Formulation 2 (fish noodle-like), which were raw materials of the heat-coagulated protein processed food product, were prepared, according to the formulations in Table 1 respectively, by adding salt to the minced fish to knead the minced fish with the salt, then adding seasonings, plant protein, oil, starch, and water, mixing them, and forming into a paste.

**[Table 1]**

| Formulation | Formulation 1 (Fish sausage-like) | Formulation 2 (Fish noodle-like) |
|---|---|---|
| Minced fish | 36.3 | 44.4 |
| Starch | 9.0 | 7.6 |
| Oil | 8.0 | 8.0 |
| Seasonings and others | 6.9 | 3.1 |
| Plant protein | 5.4 | 2.5 |
| Salt | 1.4 | 1.4 |
| Water | 33.0 | 33.0 |
| Total | 100 | 100 |

The gel strength of the heat-coagulated protein processed food product of Formulation 2 in Table 1 was measured using Rheo TEX SD-200 (Sun Scientific Co., Ltd.). The heat-coagulated protein processed food product was adjusted to a product temperature of from 20 to 25°C, cut to a length of 2 cm, placed on a sample stage such that the cross section perpendicular to the longitudinal direction was directed upward, and pressed with a 5 mm diameter spherical plunger, and the gel strength (g weight/cm) was measured. As a result of which the gel strength was from 200 to 350 g weight/cm (from 2.0 to 3.4 N/cm).

### (2) Production of Fish Sausage-Like Noodle-Shaped Body Aggregate and Fish Noodle-Like Noodle-Shaped Body Aggregate

Each of the two types of kneaded meats obtained in (1) was heated under the same conditions as production using microwave heating in Example 1 of Patent Document 1 (specifically, heated at 85°C by a continuous microwave heater (manufactured by Hiroden Ltd.) that was attached to each of the three sections divided by a metal wall on the outer periphery of the cylinder at a phase of 120°) to produce a fish sausage-like heat-coagulated protein processed food product and a fish noodle-like heat-coagulated protein processed food product. In either case, the heat-coagulated protein processed food product immediately after heating was pressed and moved to a cutting blade using a pipe in which a section perpendicular to the direction of feeding the heat-coagulated protein processed food product was substantially square, and cut into substantially six equal parts using two sets of five cutting blades arranged in parallel such that gaps at six positions were all 3 mm apart. In either case, the first five cutting blades were arranged such that the cutting blades were all horizontal against the vertical direction, and the second five cutting blades were arranged such that the cutting blades were all vertical along the vertical direction. Cutting was performed such that after the protein processed food product was passed through the two sets of cutting blades, a noodle-shaped body aggregate in which squares having one side of approximately 3 mm on a cross section perpendicular to the longitudinal direction were arranged in six columns × six rows in total thirty-six formed (see Fig. 7). The thickness of the cutting blade was 0.5 mm. Cutting was performed while all cutting blade were vibrated at from 100 Hz to 400 Hz using a plastic ball vibrator (Ball vibrator NCB-2 manufactured by NETTER GmbH). The pressing force was adjusted such that the pressure applied to the first cutting blades was 5 Pa or less, and the pressing force was adjusted such that the cut noodle-shaped body was discharged at 3 cm/sec or more. The discharged noodle-shaped body aggregate was cut at intervals of 20 cm perpendicular to the longitudinal direction. As described above, a fish sausage-like noodle-shaped body aggregate and a fish noodle-like noodle-shaped body aggregate as shown in Fig. 6 each composed of thirty-six noodle-shaped bodies which had a length of 20 cm and were in the state where squares of approximately 3 mm were arranged in six columns × six rows were obtained.

### (3) Evaluation of Fish Sausage-Like Noodle-Shaped Body Aggregate and Fish Noodle-Like Noodle-Shaped Body Aggregate

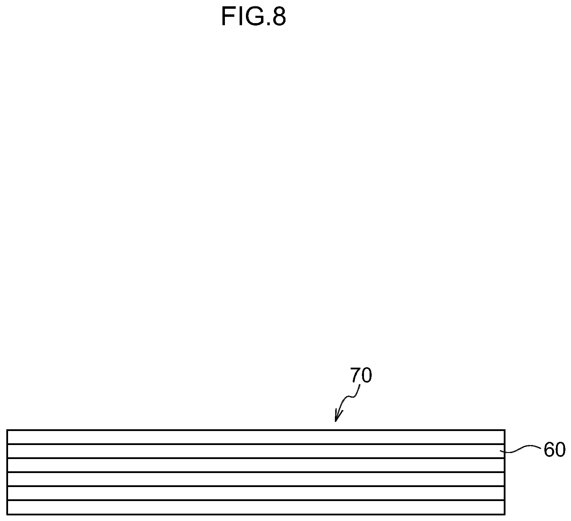

In both of the two kinds of noodle-shaped body aggregates obtained in (2), the noodle-shaped bodies cohered with each other 95% or more in the longitudinal direction as shown in Fig. 8, were not separated at normal temperature and normal pressure, and exhibited a sufficient shape retaining property. The gel breaking strength of each of the noodle-shaped body aggregates was measured by Rheo TEX SD-700 (Sun Scientific Co., Ltd.), and the results showed that each of the gel breaking strengths was from 200 to 300 g/mm (from 2.0 to 2.9 N/cm). In addition, each of the noodle-shaped body aggregates was cryopreserved at -20°C for one month, but was not separated at normal temperature and normal pressure even after thawing, and exhibited a sufficient shape retaining property. In either case, the noodle-shaped body aggregates both before freezing and after freeze-thawing were immediately separated in the case of being reconstituted in hot water, whereby the noodle-shaped body aggregates were in a state suitable for eating. Further, the fish noodle-like noodle-shaped body aggregates after freeze-thawing were used to produce Udon, Chanpon, Pescatore, Aglio e olio, Cod roe pasta, and Korean hot pot udon. In all of them, the flavor of stock produced from minced fish was added, and thus they became delicious.

Rheo TEX SD-700 (Sun Scientific Co., Ltd.) was used to measure the breaking strength, in the state after freezing and thawing, of the noodle-shaped body aggregate produced from the heat-coagulated protein processed food product of Formulation 2 in Table 1. The noodle-shaped body aggregate was packaged, steamed at 95°C for 60 minutes, then frozen and naturally thawed, adjusted to a product temperature of 20 to 25°C, and then cut to a length of 160 to 170 mm. The breaking strength (g/mm) was measured when the noodle-shaped body aggregate was vertically ruptured with a plunger using a piano wire (diameter of piano wire: 0.3 mm) for measuring cutting stress. As a result of which the breaking strength was from 200 to 300 g/mm (from 2.0 to 2.9 N/cm).

### [Comparative Example]

As a comparative example, an attempt was made to produce a noodle-shaped body aggregate using a kneaded meat prepared in the same manner as each formulation shown in Table 1 without vibrating the cutting blade. The method used was all the same as in the example except that the cutting blade was not vibrated, but neither of the kneaded meat was cut. The pressing force increased and exceeded the pressure that the pipe could withstand, whereby the pipe was deformed, and the production was stopped. Thus, it was found that dynamic cutting is very effective for smoothly cutting a kneaded meat of a formulation as each formulation shown in Table 1 into thin noodle-shaped bodies as shown in Fig. 6 to Fig. 8.

According to the disclosure, it was possible to produce a noodle-shaped body aggregate of a heat-coagulated protein processed food product having uniformity and compactness as described above.

The present invention can be used for producing a noodle-shaped body aggregate using a heat-coagulated protein processed food product.

## Claims

1. A method of producing a noodle-shaped body aggregate, the method comprising:
continuously heat-coagulating and molding a mixture that includes a protein, a lipid, and moisture and has fluidity, by an internal heating method while the mixture is moved within a cylinder having a heating part, and a non-heating part following on from the heating part, to form a heat-coagulated protein processed food product; and
dynamically cutting the heat-coagulated protein processed food product with a cutting blade to form a plurality of noodle-shaped bodies and then cohering the noodle-shaped bodies with each other as they are.

2. The method of producing a noodle-shaped body aggregate according to claim 1, wherein the plurality of noodle-shaped bodies after the cutting cohere with each other at surfaces along a longitudinal direction of the noodle-shaped bodies.

3. The method of producing a noodle-shaped body aggregate according to claim 1 or claim 2, wherein a pressure applied to the cutting blade before the cutting is 0.1 MPa or more

## Patentansprüche

1. Verfahren zur Herstellung eines nudelförmigen Körperaggregats, wobei das Verfahren umfasst:
kontinuierliches Hitzekoagulieren und Formen einer Mischung, die ein Protein, ein Lipid und Feuchtigkeit enthält und flüssigen Zustand hat, durch ein internes Erhitzungsverfahren, während die Mischung innerhalb eines Zylinders bewegt wird, der einen Heizteil und einen an den Heizteil anschließenden Nicht-Heizteil hat, um ein verarbeitetes Hitzekoaguliertes Protein-Lebensmittelprodukt zu bilden; und
dynamisches Schneiden des verarbeiteten Hitzekoagulierten Protein-Lebensmittelproduktes mit einer Schneideklinge, um eine Vielzahl von nudelförmigen Körpern zu bilden, und anschließendes Kohärieren der nudelförmigen Körper mit einander wie sie sind.

2. Verfahren zur Herstellung eines nudelförmigen Körperaggregats gemäß Anspruch 1, wobei die Vielzahl nudelförmigen Körper nach dem Schneiden an Oberflächen entlang einer Längsrichtung der nudelförmigen Körper miteinander kohärieren.

3. Verfahren zur Herstellung eines nudelförmigen Körperaggregats gemäß Anspruch 1 oder Anspruch 2, wobei ein vor dem Schneiden auf die Schneidklinge ausgeübter Druck 0,1 MPa oder mehr ist.

## Revendications

1. Procédé de production d'un agrégat de corps en forme de nouilles, le procédé comprenant:
la coagulation et le moulage à la chaleur en continu d'un mélange qui inclut une protéine, un lipide et de l'humidité et a une fluidité, par un procédé de chauffage interne tandis que le mélange est déplacé à l'intérieur d'un cylindre ayant une partie chauffante et une partie non chauffante suivant la partie chauffante, pour former un produit alimentaire transformé à protéine coagulé à la chaleur; et
la découpe dynamique du produit alimentaire transformé à protéine coagulé à la chaleur avec une lame de découpe pour former une pluralité de corps en forme de nouilles puis l'adhésion des corps en forme de nouilles entre eux en l'état.

2. Procédé de production d'un agrégat de corps en forme de nouilles selon la revendication 1, dans lequel la pluralité de corps en forme de nouilles, après la découpe, adhèrent entre eux au niveau de surfaces le long d'une direction longitudinale des corps en forme de nouilles.

3. Procédé de production d'un agrégat de corps en forme de nouilles selon la revendication 1 ou 2, dans lequel une pression appliquée à la lame de découpe avant la découpe est 0,1 MPa ou plus.
